# EUROPÄISCHE PATENTANMELDUNG

(11) **EP 1 052 140 A2**
(43) Veröffentlichungstag der Anmeldung: **15.11.2000**
(21) Anmeldenummer: 00109496.0
(22) Anmeldetag: 04.05.2000
(51) Int. Cl.: B60N 2/38

(54) **Sitzeinrichtung in einem Fahrzeug, insbesondere einem Kampffahrzeug**

(30) Priorität: 10.05.1999 DE 19921571
(71) Anmelder: Krauss-Maffei Wegmann GmbH & Co. KG, 80997 München (DE)
(72) Erfinder: Schlömer, Heinz-Jürgen, 37213 Witzenhausen (DE)
(74) Vertreter: Feder, Wolf-Dietrich, Dr. Dipl.-Phys.

(57) **Zusammenfassung**

Eine Sitzeinrichtung in einem Fahrzeug, insbesondere in einem Kampffahrzeug, bei welcher ein Sitz, insbesondere der Fahrersitz, isoliert zwischen seitlichen und vorderen Begrenzungen angeordnet ist. Der Sitz besitzt ein Grundgestell (3.1, 3.2, 4.1, 4.2, 6), an dem eine Sitzauflage mit einer Rückenlehne angeordnet ist. Im Grundgestell ist unterhalb der Sitzauflage ein im wesentlichen rechteckiger Grundrahmen (6) angeordnet. Innerhalb des Grundrahmens (6) sind zwei parallel geführte Schwingen (8,9) angeordnet, deren eines Ende jeweils drehbar am Grundrahmen (6) gelagert ist, während das andere Ende jeweils beispielsweise über einen Sitzträgerrahmen (7) mit der Unterseite der Sitzauflage verbunden ist. Die Drehachsen (8.1, 8.2, 9.1, 9.2) der Schwingen (8,9) laufen parallel zur Längsrichtung des Sitzes. Zwischen Grundrahmen (6) und Sitzauflage ist eine Druckfeder angeordnet, unter deren Kraftwirkung die Sitzauflage aus der auf dem Grundrahmen (6) aufliegenden Grundstellung unter Hochschwenken der Schwingen(8,9) in eine seitlich in Querrichtung des Sitzes versetzte und gegenüber der Grundstellung erhöhte Ein-Ausstiegsstellung bewegbar ist.

## Beschreibung

Die Erfindung betrifft eine Sitzeinrichtung in einem Fahrzeug, insbesondere einem Kampffahrzeug, bei welcher ein Sitz, insbesondere der Fahrersitz, isoliert zwischen seitlichen und vorderen Begrenzungen angeordnet ist, wobei der Sitz ein Grundgestell aufweist, an dem eine Sitzauflage mit einer Rückenlehne angeordnet ist und das Grundgestell einen unterhalb der Sitzauflage angeordneten, im wesentlichen rechteckigen Grundrahmen aufweist.

Einzeln positionierte Sitze, beispielsweise in bestimmten Typen von Kraftfahrzeugen oder auch in Kampffahrzeugen der Fahrersitz, sind üblicherweise höhenverstellbar, längsverstellbar, drehbar und neigbar angeordnet.

Diese Art der Versteilmöglichkeiten für den Sitz reichen in den Fällen nicht aus, wo der Zugang seitlich und von vorne durch begrenzende Umgebungen unmöglich und von hinten stark eingeschränkt oder nicht möglich ist. Es ist dann unmöglich, über die vorher nach hinten geklappte Rückenlehne zu klettern, um den Sitz einzunehmen oder zu verlassen. Dies bedeutet, daß das Ein- und Aussteigen einschließlich des Einnehmens oder Verlassens des Sitzes nur mit erheblicher Verzögerung möglich ist. Dies ist aber insbesondere bei Kampffahrzeugen, bei denen oft dem Fahrer oder auch einem Bediener ein Sitz zugeordnet ist, der isoliert zwischen seitlichen und vorderen Begrenzungen angeordnet ist, unerwünscht.

Der Erfindung liegt die Aufgabe zugrunde, eine Sitzeinrichtung der eingangs und im Oberbegriff des Patentanspruchs 1 beschriebenen Bauart so auszubilden, daß trotz enger seitlicher Begrenzungen der Zugang seitlich von hinten sowie der Abgang in dieser Richtung ohne Mühe möglich ist.

Die Lösung dieser Aufgabe erfolgt erfindungsgemäß mit den Merkmalen aus dem kennzeichnenden Teil des Patenanspruchs 1. Vorteilhafte Weiterbildungen der Erfindung sind in den abhängigen Ansprüchen beschrieben.

Der Grundgedanke der Erfindung besteht darin, zwischen dem Grundrahmen und der Sitzauflage des Sitzes eine Vorrichtung anzuordnen, mittels der die Sitzauflage aus ihrer Grundposition angehoben und in Querrichtung des Sitzes seitlich versetzt wird. Gleichzeitig mit der Sitzauflage wird die an ihm angeordnete Rückenlehne ebenfalls in dieser Weise angehoben und seitlich versetzt. Diese im folgenden mit "Ein-Ausstiegsstellung" bezeichnete Position der Sitzauflage soll immer dann vorhanden sein, wenn keine Person den Sitz einnimmt. Das Anheben und seitliche Versetzen der Sitzauflage geschieht unter der Wirkung der zwischen Grundrahmen und Sitzauflage angeordneten Druckfeder mittels der beiden ebenfalls zwischen Grundrahmen und Sitzauflage angeordneten Schwingen, durch die die Sitzauflage nach oben und seitlich herausgeschwenkt wird, wobei sie ihre im wesentlichen horizontale Stellung beibehält. In dieser Stellung ist an der Seite des Sitzes, von der die Sitzauflage weggeschwenkt ist, der Zugang in den Bereich vor dem Sitz außerordentlich erleichtert. Wenn sich eine Person auf die derart angehobene und seitlich weggeschwenkte Sitzauflage setzt, wird durch ihr Gewicht die Sitzauflage gegen die Wirkung der Druckfeder in die Grundstellung zurückgeschwenkt. Um dies ohne jegliche Zusatzhandgriffe zu ermöglichen, ist es zweckmäßig, wenn in der Ein-Ausstiegsstellung der Sitzauflage die Schwingen eine Stellung vor dem Totpunkt ihrer Schwenkbewegung einnehmen. Weiterhin ist es vorteilhaft, wenn die Sitzauflage in der Grundstellung durch eine Verriegelungsvorrichtung verriegelbar ist. Wenn dann die auf der in der Grundstellung befindlichen Sitzauflage sitzende Person die Verriegelung löst und aufsteht, schwenkt die Sitzauflage automatisch in die Ein-Ausstiegsstellung. Weiterhin ist es vorteilhaft, wenn parallel zur Druckfeder eine Dämpfungsvorrichtung angeordnet ist, welche insbesondere die Bewegung aus der Ein-Ausstiegsstellung in die Grundstellung unter der Wirkung des Körpergewichts dämpft.

Die erfindungsgemäße Sitzeinrichtung ist insbesondere bei Kampffahrzeugen, beispielsweise einem Spähwagen, bei denen ein Fahrersitz isoliert in einer vorgezogenen Position zwischen den Radkästen angeordnet ist, einsetzbar. Sie ist aber grundsätzlich in allen Fahrzeugen einsetzbar, bei denen ein Sitz isoliert zwischen seitlichen Begrenzungen angeordnet und dadurch das Ein-Aussteigen erheblich erschwert ist.

Im folgenden wird anhand der beigefügten Zeichnungen ein Ausführungsbeispiel für eine Sitzeinrichtung nach der Erfindung näher erläutert.

In den Zeichnungen zeigen:
Fig. 1 das Vorderteil eines Spähwagens in Aufsicht bei abgenommenem Dach im Bereich des Fahrersitzes;
Fig. 2 den Fahrersitz des Fahrzeugs nach Fig. 1 in einer Teilansicht von vorne;
Fig. 3 den Sitz nach Fig. 2 in einer Teilansicht von der Seite;
Fig. 4 den Sitz nach Fig. 2 und 3 in einer Aufsicht als Teilansicht bei abgenommener Sitzauflage und Rückenlehne;
Fig. 4A den Bereich Z aus Fig. 4 in leicht vergrößerter Darstellung;
Fig. 5 einen Schnitt nach der Linie G-G in Fig. 4;
Fig. 6 den Sitz nach Fig. 2 - 5 in perspektivischer Teil-Darstellung bei abgenommener Sitzauflage und Rückenlehne;
Fig. 7 in perspektivischer Darstellung den Grundrahmen des Sitzes nach Fig. 2 - 6;
Fig. 8 einen Schnitt nach der Linie H-H in Fig. 4;
Fig. 9 einen horizontalen Schnitt durch einen Teil der Verriegelungsvorrichtung nach der Linie N-N in Fig. 3.

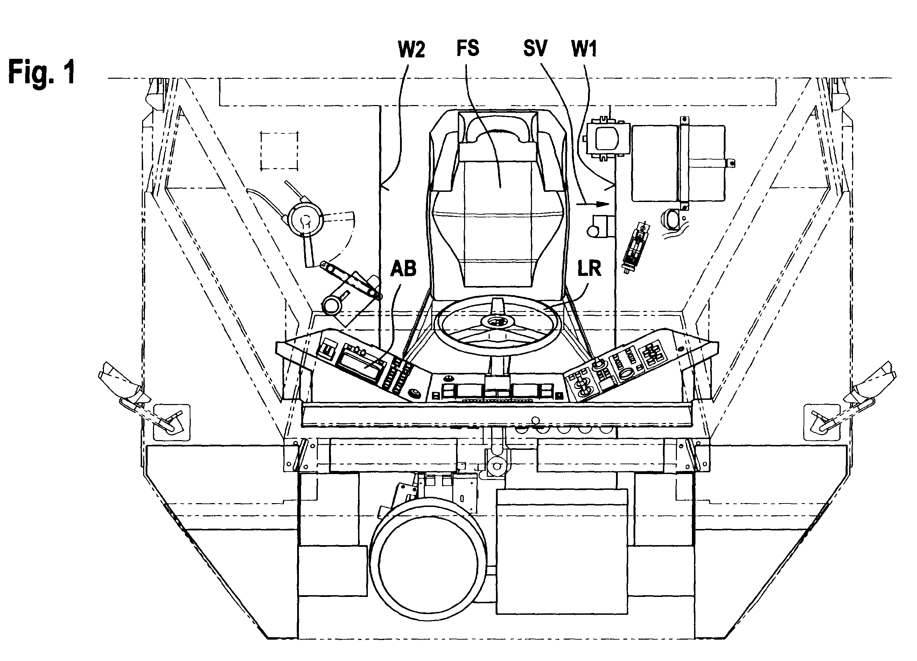

Fig. 1 zeigt die Anordnung des Fahrersitzes in einem Kampffahrzeug, nämlich einem Spähwagen. Der Fahrersitz FS ist weit nach vorne gezogen und liegt in einem verhältnismäßig engen Raum zwischen den seitlichen Begrenzungen W1 und W2, die durch die Radkästen und die Innenausstattung bedingt sind und den vorderen Begrenzungen durch das Armaturenbrett AB und das Lenkrad LR. Wie aus der Zeichnung abzulesen, erfolgt der Zugang zu diesem Fahrersitz FS seitlich von hinten und ist infolge der Begrenzungen W1 und W2 und wegen der hohen Rückenlehne des Sitzes sehr mühsam. Ebenso ist der Abgang vom Fahrersitz FS in das Fahrzeuginnere und evtl. zum Ausstieg mühsam.

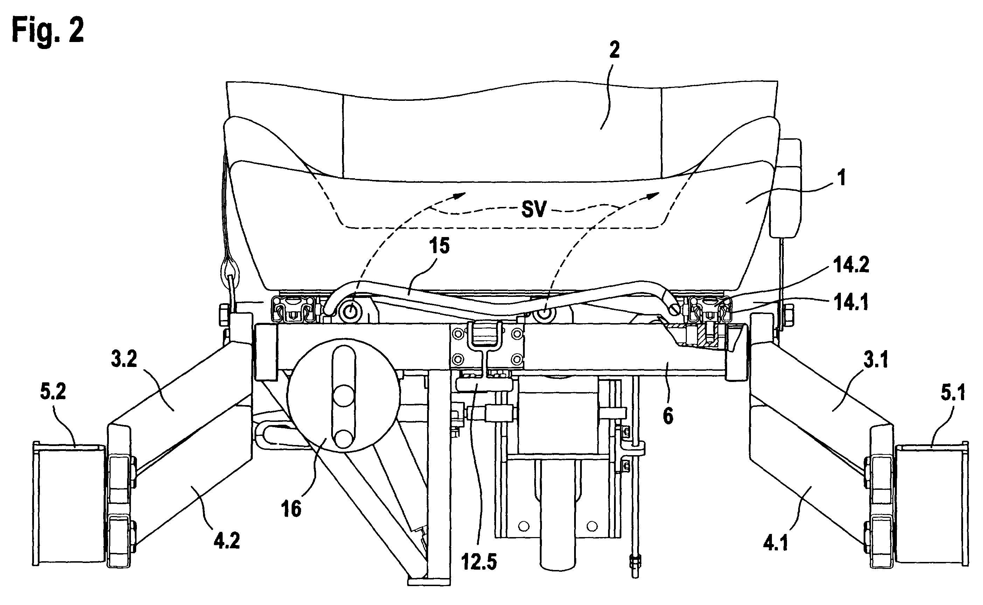

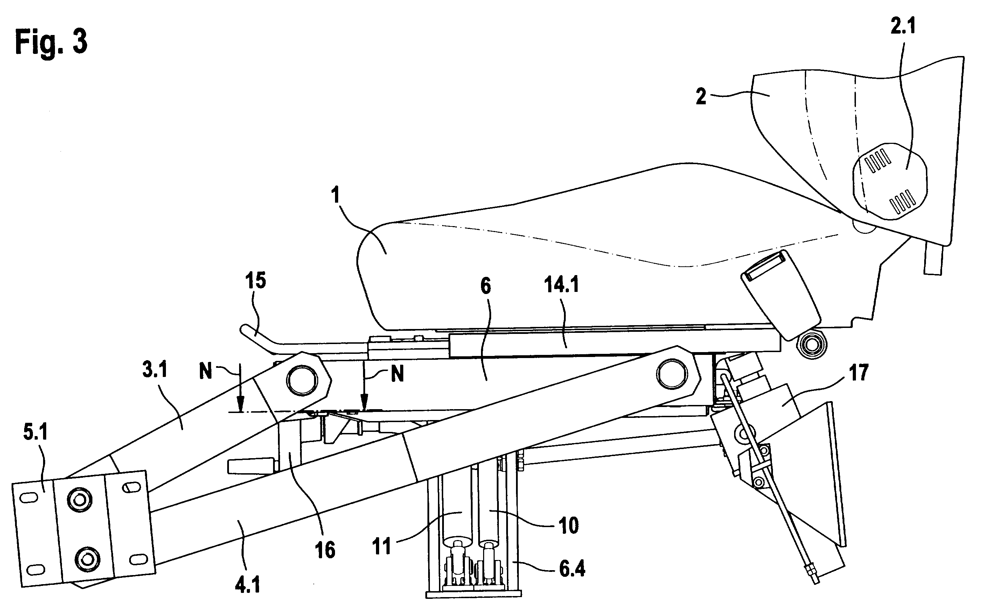

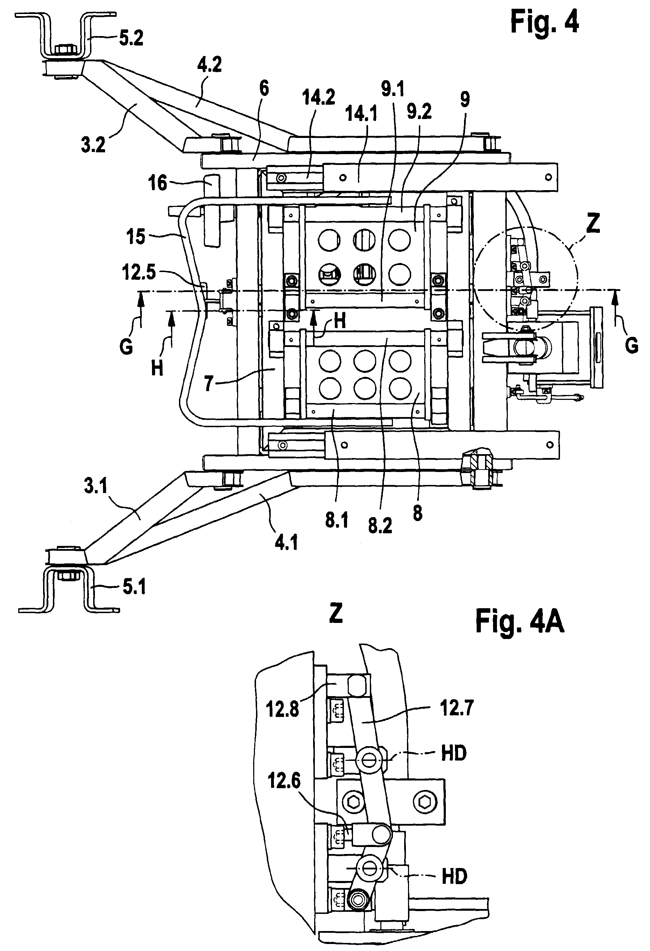

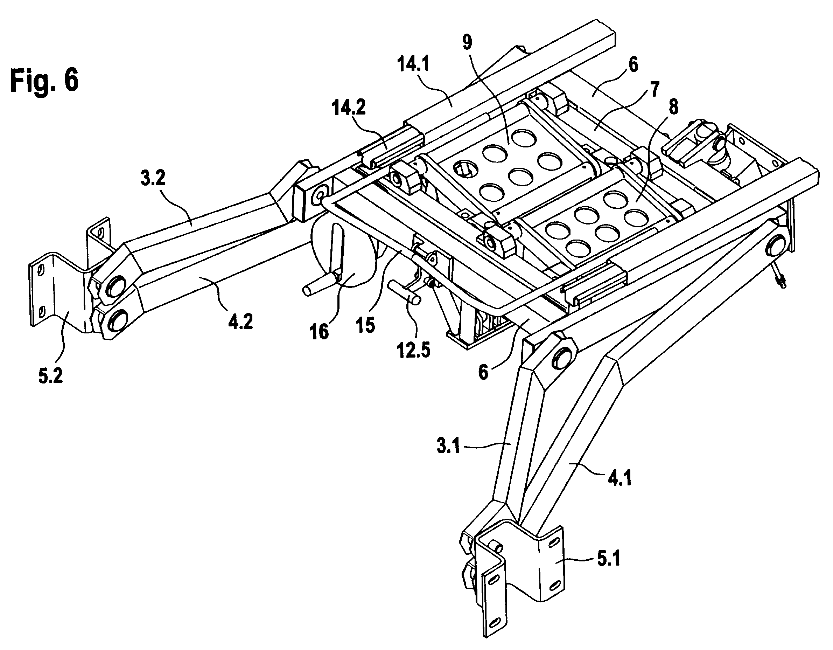

Aus diesem Grunde ist der Fahrersitz FS als Sitzeinrichtung ausgebildet, wie sie im folgenden anhand der Figuren 2 - 9 näher erläutert wird.

Die Sitzeinrichtung besitzt ein Grundgestell, das weiter unten näher erläutert wird, auf dem eine Sitzauflage 1 angeordnet ist, die an ihrer hinteren Kante mit einer Rückenlehne 2 verbunden ist. Die Rückenlehne 2 ist in bekannter und nicht eigens erläuterter Weise schwenkbar an der Sitzauflage 1 angeordnet und über einen Drehknopf 2.1 verschwenkbar.

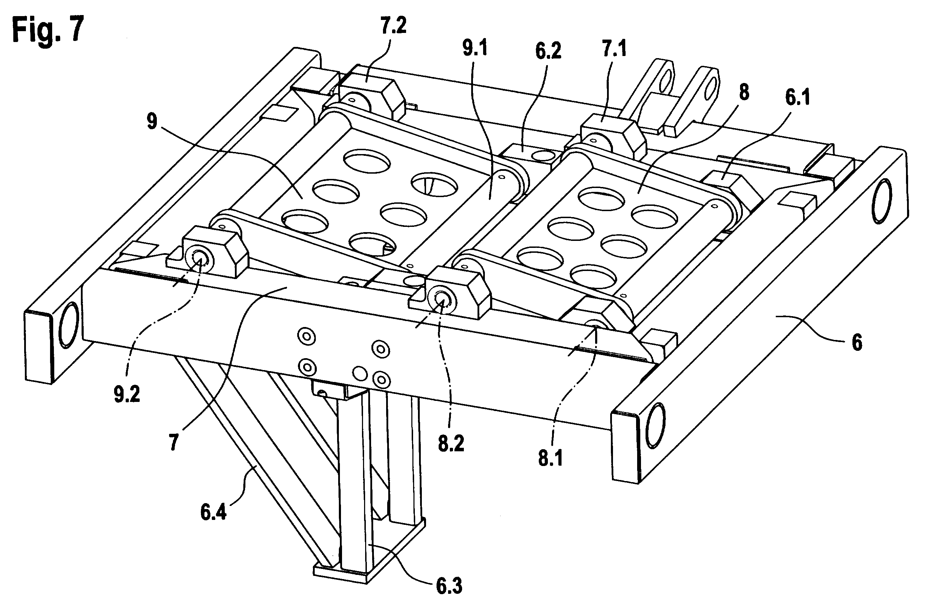

Das Grundgestell besitzt an jeder Seite Trägerarme 3.1 und 4.1 bzw. 3.2 und 4.2, die ein Parallelogrammgestänge bilden und jeweils mit einem Ende über Verankerungen 5.1 bzw. 5.2 mit dem Fahrzeugchassis verbunden sind. Über das Parallelogrammgestänge ist die ganze Sitzeinrichtung mittels einer Hubeinrich-tung 17 anhebbar. Die anderen Enden der Trägerarme tragen einen Grundrahmen 6, der im wesentlichen rechteckig ausgebildet ist. Die genauere Form des Grundrahmens ist gut aus Fig. 7 zu entnehmen. Innerhalb des Grundrahmens 6 ist ein auch im wesentlichen rechteckiger Sitzträgerrahmen 7 angeordnet. Der Sitzträgerrahmen 7 ist mit dem Grundrahmen 6 über zwei prallel geführte Schwingen 8 und 9 verbunden. Die beiden Schwingen 8 und 9 besitzen jeweils eine erste Drehachse 8.1 bzw. 9.1, die über Lagerböcke 6.1 und 6.2 am Grundrahmen 6 gelagert ist, und jeweils eine zweite Drehachse 8.2 bzw. 9.2, die über Lagerböcke 7.1 bzw. 7.2 drehbar am Sitzträgerrahmen 7 gelagert ist. Die Drehachsen 8.1 und 9.1 bzw. 8.2 und 9.2 besitzen jeweils den gleichen vorgegebenen, innerhalb des Grundrahmens 6 liegenden Abstand voneinander. Wie insbesondere aus Fig. 7 abzulesen, bedeutet dies, daß der Sitzträgerrahmen 7 in einer Parallelführung durch die Schwingen 8 und 9 aus dem Grundrahmen 6 herausgehoben und quer zur Richtung der Drehachsen 8.1, 8.2, 9.1, 9.2 seitlich herausgeschwenkt werden kann.

Die Sitzauflage 1 ist fest auf dem Sitzträgerrahmen 7 montiert, so daß sie zusammen mit dem Sitzträgerrahmen 7 angehoben und seitlich herausgeschwenkt werden kann. Um eine Verstellung der Sitzauflage 1 in Längsrichtung zu ermöglichen, sind an der Oberseite der in Längsrichtung des Sitzes verlaufenden Streben des Sitzträgerrahmens 7 jeweils Gleitschienen 14.2 befestigt, die mit an der Unterseite der Sitzauflage 1 angeordneten Gegenschienen 14.1 zur Erzeugung der Verschiebbarkeit der Sitzauflage und der Rückenlehne in Längsrichtung zusammenwirken. Dabei ist in an sich bekannter Weise die Sitzauflage 1 in unterschiedlichen Stellungen der Längsrichtung verriegelbar. Diese Verriegelung kann jeweils durch Anheben eines unter der Vorderkante der Sitzauflage 1 angeordneten Entriegelungsbügels 15 gelöst werden, so daß dann eine Verschiebung der Sitzauflage 1 in Längsrichtung möglich ist.

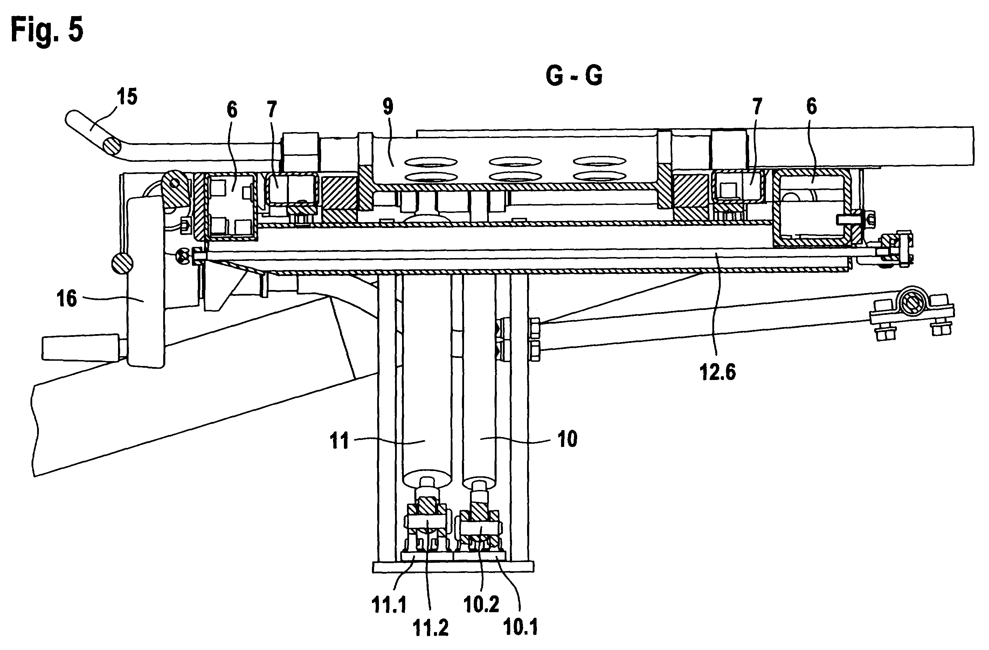

Zum Anheben des Grundrahmens 6 dient die bereits erwähnte Hubeinrichtung 17, die im folgenden nicht näher erläutert wird und die über eine unterhalb der Vorderkante der Sitzauflage 1 angeordnete Kurbel 16 betätigt werden kann. An der Unterseite des Grundrahmens 6 sind Halterungen 6.3 und 6.4 befestigt, an denen sich jeweils ein Ende einer Druckfeder 10 und eine Dämpfungsvorrichtung 11 abstützen, die, wie aus Fig. 5 zu entnehmen, über Halterungslaschen 10.1 bzw. 11.1 und Bolzen 10.2 bzw. 11.2 schwenkbar mit der Halterung 6.3 - 6.4 verbunden sind. Die jeweils anderen Enden der Druckfeder 10 und der Dämpfungsvorrichtung 11 greifen an der Unterseite der Schwingen 9 an. Dies bedeutet, daß unter der Wirkung der Druckfeder 10 die Schwingen 8 und 9 zusammen mit dem Sitzträgerrahmen 7 und der auf ihm angeordneten Sitzauflage 1 zusammen mit der Rückenlehne 2 automatisch aus der in den Zeichnungen dargestellten Grundstellung, in welcher die Sitzauflage unmittelbar über dem Grundrahmen 6 angeordnet ist, angehoben und in der bereits erläuterten Weise seitlich herausgeschwenkt werden. Diese Schwenkbewegung ist durch nicht dargestellte Anschläge so begrenzt, daß die Schwingen 8 und 9 in eine Endlage geraten, die unmittelbar vor dem Totpunkt ihrer Schwenkbewegung liegt. Dies ist die Ein-Ausstiegsstellung für den Sitz. Wenn die Sitzauflage 1 in dieser Stellung belastet wird, erfolgt gegen die Wirkung der Druckfeder 10 eine Schwenkbewegung zurück in die Grundstellung. Diese Schwenkbewegung wird durch die Dämpfungsvorrichtung 11 abgebremst, so daß, wenn eine Person sich in der Ein-Ausstiegsstellung auf die Sitzauflage 1 setzt, diese automatisch, aber gebremst in die Grundstellung zurückschwenkt.

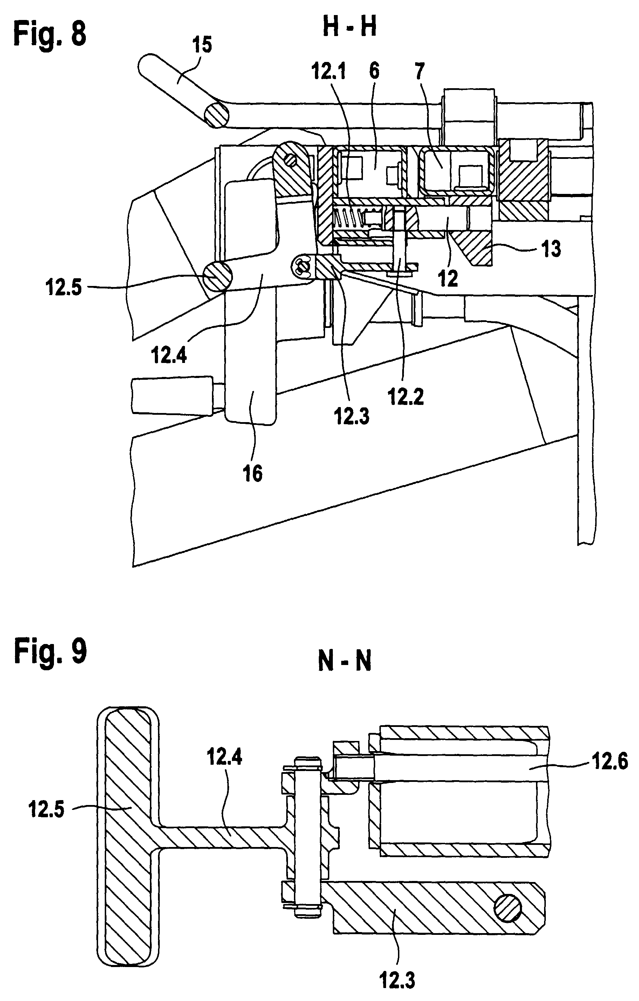

Um zu verhindern, daß bei Entlastung der Sitzauflage diese sofort nach oben schwenkt, ist eine Verriegelungsvorrichtung zur Arretierung der Sitzauflage 1 in der Grundstellung vorgesehen. Von dieser Verriegelungsvorrichtung ist in Fig. 8 ein Verriegelungselement 12 erkennbar, welches in ein mit dem Sitzträgerrahmen 7 verbundenes Gegenelement 13 eingreift. Das Verriegelungselement rastet unter der Kraft einer Druckfeder 12.1 automatisch in das Gegenelement 13 ein. Die Entriegelung erfolgt mittels eines unterhalb der Vorderkante der Sitzauflage 1 am Grundrahmen 6 angeordneten Winkelhebels 12.4, der mittels eines Handgriffs 12.5 betätigbar ist und über eine Verbindungslasche 12.3 und einen Stift 12.2 mit dem Verriegelungselement 12 verbunden ist. Um eine auf beiden Seiten wirksame Verriegelung zu erhalten, ist am Winkelhebel 12.4 weiterhin eine Zugstange 12.6 angeordnet (siehe Fig. 9), die in Längsrichtung des Sitzes unter dem Grundrahmen hindurchgeführt ist (siehe Fig. 5) und an einem an der Rückseite des Grundrahmens 6 angeordneten Schwenkhebelpaar 12.7 angreift. Das Schwenkhebelpaar 12.7 ist über die Drehachsen HD schwenkbar und betätigt an einem Ende eine Verbindungslasche 12.8, die mit einem nicht dargestellten weiteren Verriegelungselement verbunden ist, das mit einem ebenfalls nicht dargestellten weiteren Gegenelement zusammenwirkt. Wie aus den Zeichnungen ohne weiteres abzulesen, wird bei einer Betätigung des Winkelhebels 12.4 und einem entsprechenden Anziehen der Zugstange 12.6 über das Schwenkhebelpaar 12.7 auch die Verbindungslasche 12.8 zurückgezogen und dadurch auch an dieser Stelle die Verriegelung des Sitzträgerrahmens 7 im Grundrahmen 6 gelöst.

Die Funktionsweise der anhand der Fig. 2 - 9 beschriebenen Sitzeinrichtung ist folgende:

Im unbelasteten Zustand befindet sich die Sitzauflage 1 mit der Rückenlehne 2 in der angehobenen und seitlich versetzten Ein-Ausstiegsstellung. Die Richtung dieser seitlichen Versetzung ist in Fig. 1, in welcher sich der Fahrersitz FS in der Grundstellung befindet, durch den Pfeil SV angedeutet. Infolge dieser seitlichen Versetzung der Sitzauflage 1 ist es nun für den Fahrer leicht möglich, von der Gegenseite der Schwenkrichtung her am Sitz vorbei in den Bereich vor der Sitzauflage zu gelangen. Sobald er sich auf die Sitzauflage 1 setzt, schwenkt diese gebremst in die Grundstellung zurück, wie in Fig. 1 dargestellt ist. In dieser Grundstellung rastet die oben beschriebene Verriegelung ein und die Sitzauflage 1 mit Rückenlehne 2 ist in der Grundstellung arretiert. Will der Fahrer aussteigen, so löst er die Verriegelung, erhebt sich, und Sitzauflage und Rückenlehne schwenken nach oben und zur Seite, so daß er an der dem Pfeil SV gegenüberliegenden Seite am Sitz vorbei ins Fahrzeuginnere und zum Ausstieg gelangen kann.

Somit ist ein schnelles Ein- und Aussteigen des Fahrers sichergestellt.

In der Fig. 1 ist der Sitz FS als mittig im Fahrzeug angeordnet dargestellt. Selbstverständlich ist diese Anordnung keineswegs zwingend. So können beispielsweise Sitze mit einer Einrichtung nach den Fig. 2 - 9 auch außermittig, wie beispielsweise in Kampfpanzern, angeordnet sein. Es sind aber auch Anwendungen bei anderen Fahrzeugen denkbar, nämlich überall dort, wo ein isoliert stehender Sitz zwischen relativ engen Begrenzungen angeordnet sein muß.

## Patentansprüche

1. Sitzeinrichtung in einem Fahrzeug, insbesondere einem Kampffahrzeug, bei welcher ein Sitz, insbesondere der Fahrersitz, isoliert zwischen seitlichen und vorderen Begrenzungen angeordnet ist, wobei der Sitz ein Grundgestell aufweist, an dem eine Sitzauflage mit einer Rückenlehne angeordnet ist und das Grundgestell einen unterhalb der Sitzauflage angeordneten, im wesentlichen rechteckigen Grundrahmen aufweist, dadurch gekennzeichnet, daß im Grundrahmen (6) zwei parallel geführte Schwingen (8,9) angeordnet sind, deren eines Ende jeweils drehbar am Grundrahmen (6) gelagert ist, während das andere Ende jeweils drehbar an der Unterseite der Sitzauflage (1) gelagert ist, wobei die Drehachsen (8.1, 8.2, 9.1, 9.2) der Schwingen (8,9) parallel zur Längsrichtung des Sitzes verlaufen und in Querrichtung des Sitzes einen vorgegebenen, innerhalb des Grundrahmens (6,7) liegenden Abstand voneinander aufweisen und zwischen Grundrahmen (6) und Sitzauflage (1) eine Druckfeder (10) angeordnet ist, unter deren Kraftwirkung die Sitzauflage (1) aus der auf dem Grundrahmen (6) aufliegenden Grundstellung unter Hochschwenken der Schwingen (8,9) in eine seitlich in Querrichtung des Sitzes versetzte und gegenüber der Grundstellung erhöhte Ein-Ausstiegsstellung bewegbar ist.

2. Sitzeinrichtung nach Anspruch 1, dadurch gekennzeichnet, daß die Sitzauflage (1) in der Grundstellung durch eine Verriegelungsvorrichtung 12 mit dem Grundrahmen (6) verriegelbar ist.

3. Sitzeinrichtung nach Anspruch 2, dadurch gekennzeichnet, daß die Verriegelungsvorrichtung mindestens ein Verriegelungselement (12) aufweist, das unter Federkraft in ein mit der Sitzplatte (1) oder den Schwingen (8,9) verbundenes Gegenelement (13) einrastet und über ein mittels eines Handgriffs (12.5) betätigbares Entriegelungsgestänge (12.2, 12.3, 12.4, 12.6) gegen die Federkraft lösbar ist.

4. Sitzeinrichtung nach Anspruch 3, dadurch gekennzeichnet, daß der Handgriff (12.5) unterhalb der Vorderkante der Sitzauflage (1) am Grundrahmen (6) angeordnet ist.

5. Sitzeinrichtung nach einem der Ansprüche 1 - 4, dadurch gekennzeichnet, daß die Druckfeder zur Bewegung der Sitzauflage (1) in die Ein-Ausstiegsstellung eine Gasfeder (10) ist.

6. Sitzeinrichtung nach einem der Ansprüche 1 - 5, dadurch gekennzeichnet, daß parallel zur Druckfeder (10) eine Dämpfungsvorrichtung (11) angeordnet ist, die mindestens in Bewegungsrichtung aus der Ein-Ausstiegsstellung in die Grundstellung wirksam ist.

7. Sitzeinrichtung nach einem der Ansprüche 1 - 6, dadurch gekennzeichnet, daß in der Ein-Ausstiegsstellung der Sitzauflage (1) die Schwingen (8,9) eine Stellung vor dem Totpunkt ihrer Schwenkbewegung einnehmen.

8. Sitzeinrichtung nach einem der Ansprüche 1 - 7, dadurch gekennzeichnet, daß die Verbindung der Schwingen (8,9) mit der Sitzauflage (1) über einen fest mit der Sitzauflge verbundenen, im wesentlichen rechteckigen Sitzträgerrahmen (7) erfolgt.

9. Sitzeinrichtung nach Anspruch 8, dadurch gekennzeichnet, daß in der Grundstellung der Sitzauflage (1) der Sitzträgerrahmen (7) innerhalb des Grundrahmens (6) angeordnet ist.
